# EUROPÄISCHE PATENTANMELDUNG

(11) **EP 3 104 457 A1**
(43) Veröffentlichungstag der Anmeldung: **14.12.2016**
(21) Anmeldenummer: 16173290.4
(22) Anmeldetag: 07.06.2016
(51) Int. Cl.: H01Q 1/28, H01Q 3/24, H01Q 3/30, H01Q 21/20, G01S 7/03, G01S 13/88, G01S 3/46

(54) **HOCHFREQUENZSENSOR SOWIE VERFAHREN ZUM ERFASSEN UND ZUR RICHTUNGSBESTIMMUNG VON HOCHFREQUENZSIGNALEN**

(30) Priorität: 11.06.2015 DE 102015007484
(71) Anmelder: MBDA Deutschland GmbH, 86529 Schrobenhausen (DE)
(72) Erfinder: WIESNER, Andreas, 89331 Burgau (DE); WINTER, Franz, 89134 Blaustein (DE); BAMBERGER, Raimund, 89275 Elchingen (DE)
(74) Vertreter: Isarpatent

(57) **Zusammenfassung**

Die Erfindung betrifft einen Hochfrequenzsensor (1) umfassend: eine Vielzahl von Antennen (2), und eine Auswerteeinheit (3), wobei die Antennen (2) kreisförmig angeordnet sind, und wobei die Auswerteeinheit (3) eingerichtet ist, sequenziell und wiederholt für alle Antennen (2), zwei Signale parallel zu erfassen, die von zwei unterschiedlichen Antennen empfangen sind, und eine Phasendifferenz aus den erfassten Signalen zu bestimmen.

## Beschreibung

Die vorliegende Erfindung betrifft einen Hochfrequenzsensor sowie ein Verfahren zum Erfassen und zur Richtungsbestimmung von Hochfrequenzsignalen.

Der Sensor und das Verfahren gemäß der Erfindung eignen sich vor allem für die Implementierung auf fliegenden Plattformen, wie insbesondere Flugzeugen, Drohnen oder Lenkflugkörpern, bei denen üblicherweise ein limitiertes Platz- und Raumangebot herrscht. Außerdem eignet sich der erfindungsgemäße Hochfrequenzsensor optimalerweise zur Fertigung von Dual-Mode-Suchköpfen, da zusätzlich zu dem Hochfrequenzsensor ein weiterer Sensor implementiert werden kann, insbesondere ein aktiver Radarsensor oder ein aktiver Infrarotsensor. Die Aufgabe des erfindungsgemäßen Hochfrequenzsensors ist insbesondere die Detektion von Radarsignalen und die Vermessung von deren Parametern sowie die Bestimmung der Richtungsinformationen in Azimut und Elevation.

Aus dem Stand der Technik ist bekannt, die Richtung, aus denen Radarsignale ausgesandt werden, mittels Interferometrie zu bestimmen. Dazu wird eine Phasenverschiebung zwischen Empfangssignalen an zwei unterschiedlichen Orten bestimmt. Bei einem solchen Verfahren ist die Richtungsmessung nur eindeutig, solange die Phasenverschiebung zwischen den Empfangssignalen im Bereich -π bis liegt. Der eindeutige Winkelbereich ist proportional zum Verhältnis λ / d, wobei λ die Wellenlänge der Sendefrequenz und d den Ortsabstand der Empfangsorte beschreibt. Für d ist = λ/2 ist der eindeutige Winkelbereich der Halbraum von -90° bis +90°. Wählt man einen größeren Abstand der Empfangsorte, das bedeutet einen größeren Antennenabstand, so muss die Peilung auf den eindeutigen Winkelbereich begrenzt oder die Mehrdeutigkeit im Winkel aufgelöst werden.

Für die Auflösung der Mehrdeutigkeiten bei interferometrischen Peilungen können zwei Verfahren Anwendung finden. Zum einen gibt es die Möglichkeit, dass gleichzeitig mehrere Signale von mehreren Empfangsorten benutzt werden. Alternativ können auch sequenziell Signale von mehreren Empfangsorten benutzt werden. In erstem Fall wird eine Antennenanordnung mit mehreren Antennen, zumeist drei bis vier Antennen, in beiden Winkelebenen benötigt, um sowohl Azimut als auch Elevation bestimmen zu können. Für die Phasenmessungen müssen daher eine Vielzahl von Empfangskanälen realisiert werden. Dies erfordert einen hohen Hardware- und Kostenaufwand. In zweitem Fall müssen die einzelnen Antennenelemente in der Antennenanordnung so nah beieinander angeordnet werden, dass ein Abstand zwischen den Antennenelementen die Wellenlänge eines zu empfangenden Signals nicht deutlich überschreitet. Insbesondere bei kurzen Wellenlängen müssen die Antennen so sehr nah beieinander angeordnet werden. Bei Dual-Mode-Suchköpfen lassen sich solche Anordnungen aufgrund von Platzmangel nicht realisieren.

Es ist daher Aufgabe der Erfindung, einen Hochfrequenzsensor anzugeben, mit dem insbesondere Richtungsbestimmungen in den Winkelebenen Azimut und Elevation messbar sind, wobei der Hochfrequenzsensor insbesondere tauglich für die Verwendung in einem Dual-Mode-Suchkopf ist.

Gelöst wird die Aufgabe durch die Merkmale des unabhängigen Anspruchs 1. Somit wird die Aufgabe gelöst durch einen Hochfrequenzsensor umfassend eine Vielzahl von Antennen sowie eine Auswerteeinheit. Die Antennen sind insbesondere ausgebildet, kurzwellige Signale, besonders vorteilhaft Radarsignale, zu erfassen. Weiterhin sind die Antennen kreisförmig angeordnet. In der Mitte der kreisförmigen Anordnung ist somit Raum für zusätzliche Sensoren verfügbar. Dies bedeutet, dass der Hochfrequenzsensor vorteilhafterweise Platz für weitere Sensoren bereitstellt, sodass insbesondere aktive Sensoren mit dem Hochfrequenzsensor kombiniert werden können. Auf diese Weise ist der Hochfrequenzsensor tauglich, um in einem Dual-Mode-Suchkopf eingesetzt zu werden. Es ist dabei ersichtlich, dass durch den Hochfrequenzsensor erhebliche Platzeinsparungen ermöglicht werden. Die Auswerteeinheit ist eingerichtet, sequenziell wiederholend für alle Antennen zwei Signale parallel zu erfassen, die von zwei unterschiedlichen Antennen empfangen werden. Dazu ist die Auswerteeinheit eingerichtet, aus den zwei parallel erfassten Signalen eine Phasendifferenz zu bestimmen. Unter einer Vielzahl von Antennen wird erfindungsgemäß insbesondere zumindest eine Anzahl von vier, besonders vorteilhaft zumindest eine Anzahl von acht Antennen angesehen. Durch die Auswerteeinheit werden für das Erfassen von Signalen stets nur zwei Antennen gleichzeitig benötigt. Während des Erfassens von Signalen mittels zwei Antennen werden die übrigen Antennen nicht benötigt. Auf diese Weise ist der Hochfrequenzsensor sehr kompakt und kostengünstig aufgebaut, da lediglich eine geringe Anzahl, insbesondere lediglich eine Anzahl von zwei, Empfangskanäle bereitgestellt werden muss. Aus der ermittelten Phasendifferenz des Hochfrequenzsensors lässt sich mit bekannten Mitteln eine Richtungsangabe zu dem Sender der empfangenen Signale in Azimut und Elevation berechnen. Die von dem Hochfrequenzsensor bestimmten Phasendifferenzen umfassen dabei Daten, die in ihren Winkelangaben eindeutig sind. Somit ist die eingangs beschriebene Mehrdeutigkeit der Signale vermieden.

Die Unteransprüche haben vorteilhafte Weiterbildungen der Erfindung zum Inhalt.

Die Auswerteeinheit ist vorteilhafterweise eingerichtet, die Phasendifferenz zwischen zwei empfangenen Signalen von jeweils zwei Antennen zu bestimmen, die symmetrisch zu einem Mittelpunkt der kreisförmigen Anordnung sind. Dabei sind die Antennen insbesondere punktsymmetrisch. Da die Antennen kreisförmig angeordnet sind, befinden sich diese auf einer virtuellen Kreislinie, wobei von dieser virtuellen Kreislinie ein Mittelpunkt vorhanden ist. Eine Verbindungslinie zwischen zwei Antennen muss somit den Mittelpunkt schneiden, damit die Antennen symmetrisch zu dem Mittelpunkt sind. Durch eine derartige parallele Messung ist die Auswertung der erfassten Signale sehr einfach.

Die Auswerteeinheit weist bevorzugt zwei Verarbeitungseinheiten auf. Insbesondere weist die Auswerteeinheit genau zwei Verarbeitungseinheiten auf. Jede Antenne ist dabei vorteilhafterweise mit genau einer der Verarbeitungseinheiten zur Signalübertragung verbunden. Somit ist ersichtlich, dass für den Hochfrequenzsensor nur geringe Hardwareanforderungen bestehen. Insbesondere werden lediglich zwei Verarbeitungseinheiten benötigt, mit denen eine große Vielzahl von Antennen verwendbar ist. Somit ist der Hochfrequenzsensor sehr einfach und kostengünstig aufgebaut.

Die Auswerteeinheit weist besonders vorteilhaft eine erste Verarbeitungseinheit und eine zweite Verarbeitungseinheit auf. Dabei ist eine erste Gruppe der Vielzahl von Antennen mit der ersten Verarbeitungseinheit zur Signalübertragung verbunden, während eine zweite Gruppe der Vielzahl von Antennen mit der zweiten Verarbeitungseinheit zur Signalübertragung verbunden ist. Weiterhin ist bevorzugt vorgesehen, dass jede Antenne der ersten Gruppe zu genau einer Antenne aus der zweiten Gruppe symmetrisch zu einem Mittelpunkt der kreisförmigen Anordnung der Antennen ist. Besonders vorteilhaft erfolgt ein paralleles Erfassen von Signalen gleichzeitig durch die erste Verarbeitungseinheit und die zweite Verarbeitungseinheit. Dabei werden pro Erfassungsschritt jeweils ein Signal einer der Antennen aus der ersten Gruppe und ein Signal einer der Antennen aus der zweiten Gruppe erfasst. Dies wird für alle Antennen zyklisch und sequenziell wiederholt. Somit lassen sich Daten von jeder Antenne erfassen, wobei lediglich zwei Verarbeitungseinheiten benötigt werden. Dies bedeutet, dass die Auswerteeinheit sehr kompakt und kostengünstig aufgebaut ist.

Besonders vorteilhaft ist jede Verarbeitungseinheit in der Art ausgebildet, dass diese einen Verteiler und einen Signalverarbeitungskanal aufweist. Somit weist insbesondere die erste Verarbeitungseinheit einen ersten Verteiler und einen ersten Signalverarbeitungskanal auf, während die zweite Verarbeitungseinheit einen zweiten Verteiler und einen zweiten Signalverarbeitungskanal aufweist. Dabei ist jede Antenne mit genau einem Eingang eines Verteilers zur Signalübertragung verbunden. Weiterhin ist von dem Verteiler jeweils ein Eingang mit dem Signalverarbeitungskanal verbindbar. Somit sind alle Antennen entweder mit der ersten Verarbeitungseinheit oder mit der zweiten Verarbeitungseinheit verbunden, wobei die jeweiligen Verteiler der Verarbeitungseinheiten stets nur eine einzige Antenne mit dem jeweiligen Signalverarbeitungskanal verbinden. Der Signalverarbeitungskanal ist vorteilhafterweise ein Empfangskanal. Somit müssen lediglich zwei Signalverarbeitungskanäle bereitgestellt werden, wobei dennoch sämtliche Antennen zum Empfang von Signalen verwendet werden können. Durch das sequenzielle Verwenden einzelner Antennen für den Signalempfang kann die Mehrdeutigkeit bei der Bestimmung von Winkelinformationen über die Herkunft des empfangenen Signals aufgelöst werden.

In einer besonders vorteilhaften Ausführung sind die Antennen Spiralantennen. Diese eignen sich besonders vorteilhaft zur Detektion von kurzwelligen Signalen, wobei Spiralantennen eine gute Breitbandeigenschaft bei geringen Abmessungen aufweisen. Die Antennen können außerdem vorteilhafterweise entweder äquidistant oder nicht äquidistant angeordnet sein, so lange die Kreisform der Anordnung erhalten bleibt.

Die Erfindung betrifft weiterhin einen Suchkopf für einen Flugkörper. Der Suchkopf umfasst einen Hochfrequenzsensor wie zuvor beschrieben. Besonders vorteilhaft ist der Suchkopf ein Dual-Mode-Suchkopf, sodass der Suchkopf zumindest zwei Sensoren umfasst. Da bei dem Hochfrequenzsensor im zentralen Bereich der Apertur Raum für einen zweiten Sensor zur Verfügung steht, ist somit ein sehr kompakter Suchkopf, insbesondere ein Multi-Mode-Suchkopf, realisierbar. Der Suchkopf kann daher auf Flugkörpern mit geringen Abmessungen verwendet werden.

Schließlich betrifft die Erfindung ein Verfahren zum Erfassen von Hochfrequenzsignalen. Dabei ist vorgesehen, dass eine Vielzahl von Antennen kreisförmig angeordnet ist. Das Verfahren umfasst die folgenden Schritte: Zunächst werden parallel zwei Signale erfasst, die von zwei verschiedenen Antennen empfangen werden. Anschließend erfolgt ein Bestimmen einer Phasendifferenz zwischen den empfangenen Signalen. Danach werden diese Schritte sequenziell und wiederholt für alle Antennen ausgeführt. Das Verfahren ist vorteilhafterweise auf einer sehr kostengünstigen Hardware ausführbar, da lediglich zwei Signale parallel erfasst werden müssen. Somit müssen lediglich zwei Empfangskanäle zur Verfügung gestellt werden. Dennoch können Signale von einer Vielzahl von Antennen verarbeitet werden, wodurch sehr genaue Richtungsinformationen bestimmbar sind. Durch das sequenzielle Wiederholen eines parallelen Erfassens von zwei Signalen wird außerdem die Mehrdeutigkeit bei der Berechnung von Richtungsinformationen aufgelöst.

Besonders vorteilhaft erfolgt das parallele Erfassen der zwei Signale jeweils von zwei Antennen, die symmetrisch zu einem Mittelpunkt der kreisförmigen Anordnung der Antennen sind. Somit erfolgt das Erfassen stets von einem Antennenpaar, wobei das Antennenpaar auf einer virtuellen Verbindungslinie liegt, die den Mittelpunkt der kreisförmigen Anordnung schneidet. Dies vereinfacht die Bestimmung der Richtungen in Azimut und Elevation, aus denen das Signal empfangen wurde.

Schließlich ist bevorzugt vorgesehen, dass aus den bestimmten Phasendifferenzen eine mathematische Funktion berechnet wird. Die mathematische Funktion stellt dabei die Phasendifferenz in Abhängigkeit von einem Positionswinkel der kreisförmigen Anordnung der Antennen dar. Dazu wird vorteilhafterweise ein beliebiger aber fester Nullpunkt gewählt, wobei ausgehend von diesem Nullpunkt jeder Antenne ein Positionswinkel zugeordnet werden kann. Durch Interpolation der Phasendifferenzenverläufe lässt sich somit eine mathematische Funktion bestimmen, sodass zu jedem Positionswinkel eine zugehörige Phasendifferenz berechenbar ist. Die mathematische Funktion ist vorteilhafterweise eine Sinuskurve, sodass ein Bestimmen von Richtungswinkeln in Azimut und Elevation möglich wird, da insbesondere durch diese Funktion das Auflösen der Mehrdeutigkeiten vereinfacht wird. Vorteilhafterweise wird die mathematische Funktion mit jeder durchgeführten Signalerfassung aktualisiert. Bevorzugt werden aus der Amplitude des Phasendifferenzverlaufes und aus der Phasenverschiebung zwischen Differenzphase und Positionswinkel eines Antennenpaares die Signaleinfallswinkel Elevation und Azimut berechnet. Dabei stellt die Sinusform der Phasendifferenz viele Vorteile bei der Implementierung von Algorithmen für die Auflösung von Mehrdeutigkeiten dar. Somit ist das erfindungsgemäße Verfahren sehr einfach und kostengünstig durchführbar, da die Hardwareanforderungen sehr gering sind.

Die Erfindung wird nun anhand eines Ausführungsbeispiels unter Berücksichtigung der beigefügten Zeichnungen im Detail beschrieben. In den Zeichnungen ist:
- Fig. 1: eine schematische Abbildung eines Hochfrequenzsensors gemäß einem Ausführungsbeispiels der Erfindung und
- Fig. 2: eine schematische Darstellung eines Phasendifferenzverlaufes, der mit dem Hochfrequenzsensor aus Figur 1 bestimmbar ist.

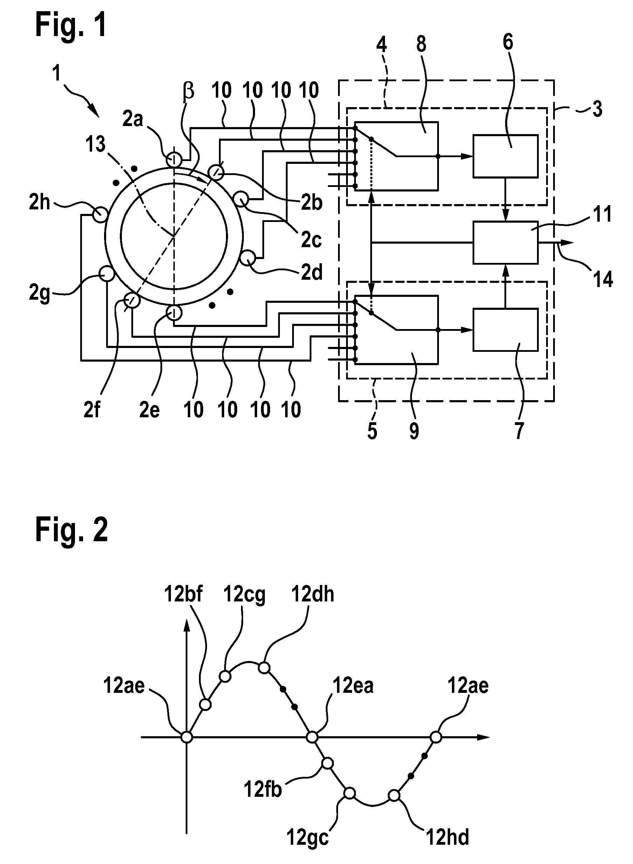

Figur 1 zeigt eine schematische Abbildung eines Hochfrequenzsensors 1 gemäß einem Ausführungsbeispiel der Erfindung. Der Hochfrequenzsensor 1 umfasst eine Vielzahl von Antennen 2. Die Antennen 2 sind insbesondere wegen guter Breitbandeigenschaften und geringen Abmessungen als Spiralantennen ausgeführt. Weiterhin sind die Antennen 2 kreisförmig um einen Mittelpunkt 13 angeordnet. Dabei können die Antennen 2 äquidistant oder nicht äquidistant auf dem Kreis angeordnet sein. Jede Antenne 2 bildet mit einer symmetrisch zu dem Mittelpunkt 13 angeordneten Antenne 2 ein Antennenpaar. In dem in Figur 1 gezeigten Ausführungsbeispiel bilden somit die Antennen 2a und 2e, 2b und 2f, 2c und 2g und 2d und 2h jeweils ein Antennenpaar. Dabei ist vorgesehen, dass die erstgenannten Antennen jedes Paares zu einer ersten Gruppe gezählt werden, während die letztgenannten Antennen eines jeden Paares zu einer zweiten Gruppe gezählt werden.

Der Hochfrequenzsensor 1 weist außerdem eine Auswerteeinheit 3 auf. Die Auswerteeinheit 3 umfasst eine erste Verarbeitungseinheit 4 sowie eine zweite Verarbeitungseinheit 5. Außerdem umfasst die Auswerteeinheit 3 eine Steuereinheit 11.

Die erste Verarbeitungseinheit 4 dient zum Verarbeiten der Signale der ersten Gruppen von Antennen 2, während die zweite Verarbeitungseinheit 5 zum Verarbeiten der zweiten Gruppe von Antennen 2 dient. Dabei weist die erste Verarbeitungseinheit 4 einen ersten Verteiler 8 und einen ersten Signalverarbeitungskanal 6 auf. Ebenso weist die zweite Verarbeitungseinheit 5 einen zweiten Verteiler 9 und einen zweiten Signalverarbeitungskanal 7 auf.

Die Antennen 2 aus der ersten Gruppe sind, insbesondere über Hochfrequenzleiter 10, mit jeweils einem Eingang des ersten Verteilers 8 verbunden. Der erste Verteiler 8 ist ausgebildet, die Eingänge zyklisch zu aktivieren, sodass der erste Verteiler 8 sequenziell jede Antenne 2 aus der ersten Gruppe mit dem ersten Signalverarbeitungskanal 6 verbindet. Dazu wird der erste Verteiler 8 von der Steuerungseinheit 11 entsprechend angesteuert, sodass eine Durchschaltrate zwischen den einzelnen Eingängen von der Steuerungseinheit 11 steuerbar ist.

Nach dem gleichen Prinzip sind die Antennen 2 der zweiten Gruppe, wiederum insbesondere über Hochfrequenzleiter 10, mit dem zweiten Verteiler 9 verbunden. Der zweite Verteiler 9 wird wiederum von der Steuerungseinheit 11, analog zu dem ersten Verteiler 8, angesteuert, sodass der zweite Verteiler 9 jede Antenne 2 aus der zweiten Gruppe sequenziell mit dem zweiten Signalverarbeitungskanal 7 verbindet.

Die Auswerteeinheit 3 ist somit in der Lage, parallel Signale zu erfassen, die von zwei symmetrisch zu dem Mittelpunkt 13 liegenden Antennen 2 empfangen wurden. Dabei ist insbesondere vorgesehen, dass der erste Signalverarbeitungskanal 6 und der zweite Signalverarbeitungskanal 7 eine Phasendifferenz zwischen den erfassten Signalen bestimmen und an die Steuerungseinheit 11 ausgeben. Insbesondere werden die Phasendifferenzen an die Steuerungseinheit 11 in digitaler Form übergeben. Von der Steuerungseinheit 11 sind die bestimmten Phasendifferenzenüber einen Ausgang 14 abgebbar.

Es ist daher ersichtlich, dass eine Vielzahl von Antennen 2 verwendet werden kann, wobei lediglich zwei dieser Antennen gleichzeitig verwendet werden. Die zwei gleichzeitig verwendeten Antennen sind symmetrisch zu dem Mittelpunkt 13 angeordnet. Die Steuerungsvorrichtung 11 erlaubt ein sequenzielles Durchschalten des ersten Verteilers 8 und des zweiten Verteilers 9, sodass zyklisch alle Antennen 2 sequenziell mit dem ersten Signalverarbeitungskanal 6 oder dem zweiten Signalverarbeitungskanal 7 verbunden werden.

Die von der Steuerungseinheit 11 ausgegebenen Phasendifferenzen sind in Figur 2 gezeigt. Durch den Aufbau des Hochfrequenzsensors 1 ergibt sich in vorteilhafter Weise eine sinusförmige Kurve. In Figur 2 ist ein Diagramm gezeigt, bei dem die Abszisse den Positionswinkel β (vgl. Figur 1) eines jeden Antennenpaares anzeigt, während auf der Ordinate eine Phasendifferenz abgetragen ist. Es ist ersichtlich, dass so eine Sinuskurve entsteht. Dabei zeigen die einzelnen Punkte 12 die jeweiligen Phasendifferenzen an, die ermittelt wurden, wenn die zugehörigen Antennen mit den Signalverarbeitungskanälen 6, 7 verbunden wurde. So zeigt beispielsweise der Punkt 12ae an, dass für die Messung des Punktes 12ae die Antenne 2a mit dem ersten Verarbeitungskanal 6 und die Antenne 2e mit dem zweiten Signalverarbeitungskanal 7 verbunden war. Der so erhaltene Verlauf der Phasendifferenz über den Positionswinkel β lässt sich über den Ausgang 14 der Steuerungseinheit 11 ausgeben. Dieser Verlauf kann anschließend von weiteren Einheiten benutzt werden, um die Signaleinfallswinkel Elevation und Azimut des empfangenen Signals zu berechnen. Insbesondere lässt sich aus der Amplitude des Phasendifferenzverlaufes und aus der Phasenverschiebung zwischen Differenzphase und Positionswinkel β der besagte Einfallswinkel jeweils in Elevation und Azimut berechnen.

Durch die Sinusform des Phasendifferenzverlaufs ist ein Algorithmus zur Auflösung von Mehrdeutigkeiten sehr einfach. Somit kann die Steuerungseinheit 11 sehr einfach und kostengünstig ausgelegt werden, da diese nur geringe Rechenleistungen vollbringen muss.

Die Erfindung hat die folgenden Vorteile:
- Die vorliegende Erfindung beschreibt die Realisierung eines winkelauflösenden breitbandigen passiven Hochfrequenzsensors mit zwei Empfangskanälen und einer Antennenanordnung, die die Integration eines weiteren Sensors im Zentralbereich der Apertur ermöglicht. Die Auflösung der Mehrdeutigkeiten wird durch die sequenzielle Nutzung von Antennenpaaren erreicht.
- Die Antennen der Antennenanordnung werden in einer Kreisanordnung, insbesondere um einen Mittelpunkt oder um einen zweiten Sensor, positioniert. Der Durchmesser der Kreisanordnung kann dabei die Wellenlänge der Empfangsfrequenz um ein Vielfaches überschreiten.
- Eine große Antennenbasis steigert die Genauigkeit der Bestimmung der Richtungswinkel. Somit werden mehr Antennen benötigt, wenn der Richtungswinkel eindeutig bestimmt werden soll.
- Hochfrequenzschalter verbinden sequenziell jeweils gegenüberliegende Antennen mit den Empfangskanälen, die den Phasenunterschied zwischen den beiden Kanälen vermessen.
- Ein Steuerungssystem gibt die Schalterstellungen vor und sorgt damit dafür, dass die Antennenpaare zyklisch mit den Empfangskanälen verbunden werden.
- Die Auflösung der Mehrdeutigkeiten erfolgt durch die Verarbeitung der Phasendifferenzen von verschiedenen Schalterstellungen und damit verschiedenen Antennenpaaren. Die Richtungsbestimmung erfolgt zeitlich sequenziell durch Auswertung der Antennenpaardifferenzen verschiedener Antennenpaar-Positionswinkel.
- Das Verfahren eignet sich sowohl für rollende als auch für nicht rollende Flugkörper, insbesondere Lenkflugkörper.
- Die Umschaltrate der Antennenpaare kann flexibel gewählt werden und so entsprechend der zu vermessenden Signalmodulation, insbesondere Pulswiederholrate oder Continuous Wave, optimal angepasst werden. So kann die Zeit, bis die Richtungsinformation ermittelt ist, verkürzt werden.
- Das Verfahren aus der vorliegenden Erfindung, die Antennen elektronisch zu schalten, vermeidet viele Einschränkungen eines vergleichbaren mechanisch gedrehten Interferometers, wie insbesondere die Drehgeschwindigkeit und die Drehbeschleunigung.

### Bezugszeichenliste

- 1: Hochfrequenzsensor
- 2: Antenne
- 3: Auswerteeinheit
- 4: Erste Verarbeitungseinheit
- 5: Zweite Verarbeitungseinheit
- 6: Erster Signalverarbeitungskanal
- 7: Zweiter Signalverarbeitungskanal
- 8: Erster Verteiler
- 9: Zweiter Verteiler
- 10: Hochfrequenzleiter
- 11: Steuerungseinheit
- 12: Phasendifferenz
- 13: Mittelpunkt
- 14: Ausgang
- β: Positionswinkel

## Patentansprüche

1. Hochfrequenzsensor (1) umfassend:
- eine Vielzahl von Antennen (2), und
- eine Auswerteeinheit (3),
- wobei die Antennen (2) kreisförmig angeordnet sind, und
- wobei die Auswerteeinheit (3) eingerichtet ist, sequenziell und wiederholt für alle Antennen (2), zwei Signale parallel zu erfassen, die von zwei unterschiedlichen Antennen empfangen sind, und eine Phasendifferenz aus den erfassten Signalen zu bestimmen.

2. Hochfrequenzsensor (1) nach Anspruch 1, **dadurch gekennzeichnet, dass** die Auswerteeinheit (3) eingerichtet ist, die Phasendifferenz zwischen empfangenen Signalen von jeweils zwei Antennen (2) zu bestimmen, die symmetrisch um einen Mittelpunkt der kreisförmigen Anordnung sind.

3. Hochfrequenzsensor (1) nach einem der vorhergehenden Ansprüche, **dadurch gekennzeichnet, dass** die Auswerteeinheit (3) zwei Verarbeitungseinheiten (4, 5) aufweist, wobei jede Antenne (2) mit genau einer der Verarbeitungseinheiten (4, 5) zur Signalübertragung verbunden ist.

4. Hochfrequenzsensor (1) nach einem der vorhergehenden Ansprüche, **dadurch gekennzeichnet, dass** die Auswerteeinheit (3) eine erste Verarbeitungseinheit (4) und eine zweite Verarbeitungseinheit (5) aufweist, wobei eine erste Gruppe der Vielzahl von Antennen (2) mit der ersten Verarbeitungseinheit (4) zur Signalübertragung verbunden ist und eine zweite Gruppe der Vielzahl von Antennen (2) mit der zweiten Verarbeitungseinheit (5) zur Signalübertragung verbunden ist, und wobei jeweils eine Antenne (2) aus der ersten Gruppe und eine Antenne (2) aus der zweiten Gruppe symmetrisch zu einem Mittelpunkt der kreisförmigen Anordnung der Antennen (2) sind.

5. Hochfrequenzsensor (1) nach Anspruch 3 oder 4, **dadurch gekennzeichnet, dass** jede Verarbeitungseinheit (4, 5) einen Verteiler (8, 9) und einen Signalverarbeitungskanal (6, 7) aufweist, wobei jede Antenne (2) mit genau einem Eingang des Verteilers (8, 9) zur Signalübertragung verbunden ist, und wobei von dem Verteiler (8, 9) jeweils ein Eingang mit dem Signalverarbeitungskanal (6, 7) verbindbar ist.

6. Hochfrequenzsensor (1) nach einem der vorhergehenden Ansprüche, **dadurch gekennzeichnet, dass** die Antenne (2) Spiralantennen sind.

7. Suchkopf, insbesondere Dual-Mode-Suchkopf, für einen Flugkörper, umfassend einen Hochfrequenzsensor (1) nach einem der vorhergehenden Ansprüche.

8. Verfahren zum Erfassen von Hochfrequenzsignalen, wobei eine Vielzahl von Antennen (2) kreisförmig angeordnet sind, umfassend die Schritte:
- paralleles Erfassen von zwei Signalen, die von zwei verschiedenen Antennen (2) empfangen werden, und
- Bestimmen einer Phasendifferenz zwischen den empfangenen Signalen,
- wobei die Schritte sequenziell und wiederholt für alle Antennen (2) ausgeführt werden.

9. Verfahren nach Anspruch 8, **dadurch gekennzeichnet, dass** das parallele Erfassen der Signale jeweils von zwei Antennen (2) erfolgt, die symmetrisch zu einem Mittelpunkt der kreisförmigen Anordnung der Antennen (2) sind.

10. Verfahren nach Anspruch 8 oder 9, **dadurch gekennzeichnet, dass** aus den bestimmten Phasendifferenzen eine mathematische Funktion berechnet wird, welche die Phasendifferenz in Abhängigkeit von einem Positionswinkel der Antennen (2) innerhalb der kreisförmigen Anordnung der Antennen (2) darstellt.
